# EUROPEAN PATENT SPECIFICATION

(11) **EP 3 078 553 B1**
(45) Date of publication and mention of the grant of the patent: **15.05.2019**
(21) Application number: 14861966.1
(22) Date of filing: 10.11.2014
(51) Int. Cl.: B60S 1/38

(54) **WIPER BLADE ASSEMBLY**
WISCHERBLATTANORDNUNG
ENSEMBLE BALAI D'ESSUIE-GLACE

(30) Priority: 15.11.2013 KR 20130139275
(43) Date of publication of application: 12.10.2016
(73) Proprietor: CAP Corporation, Sangju-si, Gyeongsangbuk-do 742-320 (KR)
(72) Inventor: KIM, Jae Woong, Sangju-si Gyeongsangbuk-do 742-020 (KR); KIM, Tae Hun, Daegu 704-880 (KR)
(74) Representative: Zeitler Volpert Kandlbinder Patent- und Rechtsanwälte Partnerschaft mbB
(86) International application number: PCT/KR2014/010749
(87) International publication number: WO 2015/072712

(56) References cited:
- WO-A1-2006/088274
- WO-A1-2013/118958
- JP-A- 2008 526 613
- KR-A- 20130 119 553
- KR-A- 20130 132 088
- KR-B1- 100 629 161
- US-A1- 2010 139 026
- US-A1- 2012 090 123

## Description

### [Technical Field]

The present invention relates to a wiper blade assembly, and more particularly, to a wiper blade assembly having a structure capable of allowing an adhering member and a spoiler to freely move against each other.

### [Description of the Related Art]

A wiper blade assembly for wiping out the rain in case of rain or removing foreign materials to secure a driver's visual field is disposed in a wind shield of a vehicle. The wiper blade assembly is connected to a wiper arm connected to a driving shaft connected to a wiper driving motor of the vehicle to be driven.

Here, the wiper arm and the wiper blade assembly are connected to each other through a wiper connector part. In general, the wiper blade assembly includes a clamp, to which the connector member is coupled, and the wiper arm is coupled to the connector member in a state in which the connector member is coupled to the clamp.

Meanwhile, the wiper blade assembly may be classified into a conventional type and a flat type according to the structure of a blade.

A typical wiper blade assembly includes an adhering member wiping any foreign materials off a windshield of a vehicle, an elastic member supporting the adhering member, and a cover member covering either end of the elastic member.

The typical wiper blade assembly also includes a coupling cover coupled to the elastic member, and the coupling cover may also be coupled to an adaptor.

For example, Korean Patent No. 1201547 discloses, in FIGS. 4A to 4D thereof, a wiper blade assembly including a clamp coupled to an elastic member, a coupling cover covering the clamp and including a receiving unit, and an adaptor attached to or detached from the coupling cover.

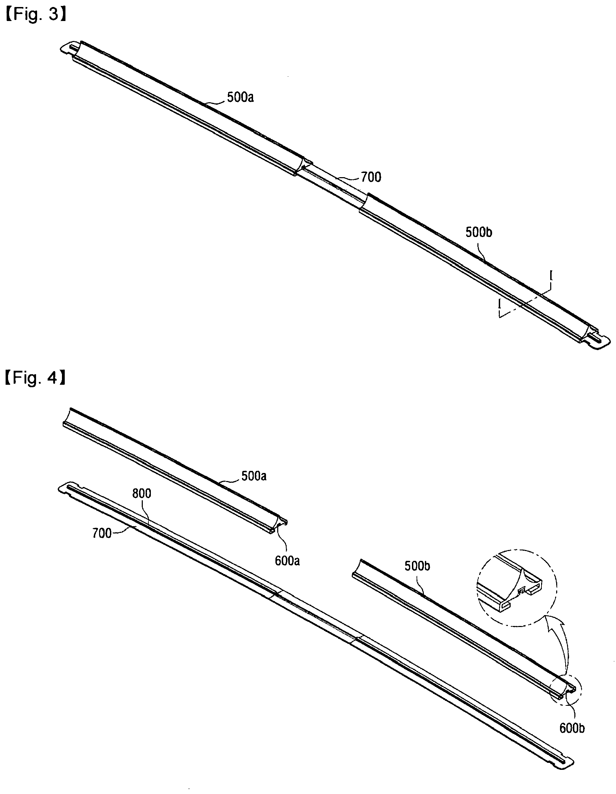

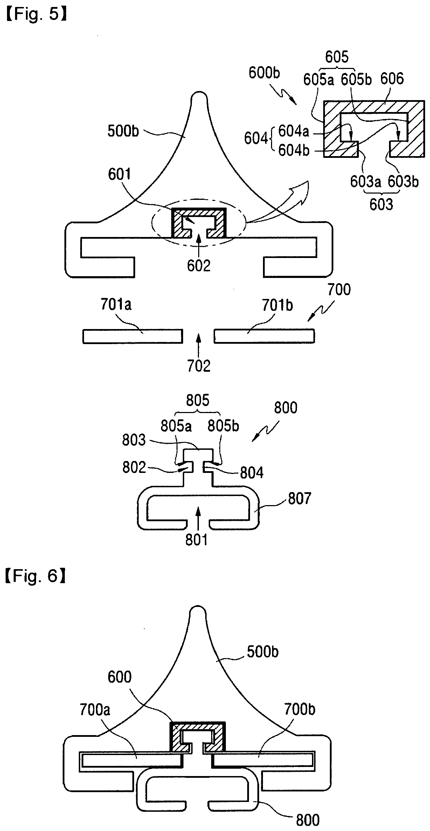

Referring to FIG. 5 of the aforementioned Korean Patent, an adhering member of a wiper blade is coupled to the elastic member, and the elastic member is coupled to the clamp. FIG. 4B of the aforementioned Korean Patent teaches a structure for coupling the clamp to the coupling cover.

However, in the case of the patented wiper blade assembly, the movement of the cover member (or a spoiler) is not free from the adhering member during the operation of the wiper blade.

More specifically, a typical wiper blade has an adhering member bent with a predetermined curvature, and the adhering member is a predetermined distance from the surface of a windshield of a vehicle, while the wiper blade is not being driven. On the other hand, during the operation of the wiper blade assembly, the adhering member is placed in contact with the surface of the windshield and wipes the surface of the windshield.

The curvature of the adhering member may vary from when the wiper blade assembly is being driven to when the wiper blade assembly is not being driven. However, if the cover member is not free from the movement of the adhering member, the movement of the cover member may be considerably limited even though the curvature of the adhering member can vary.

As a result, the cover member may be damaged. The limited movement of the cover member may interfere with the variation of the curvature of the adhering member, and may thus adversely affect the wiping performance of the adhering member.
A wiper blade assembly according to the preamble of claim 1 is known from WO 2013/118958 A1 or WO 2006/088274 A1.

Therefore, Applicant presents herein a wiper blade assembly having a new structure, i.e., a wiper blade assembly with a different structure from that of the patented wiper blade assembly for coupling an adhering member, an elastic member and a clamp.

### [Technical Problems]

Aspects of the present invention provide a wiper blade assembly having a structure capable of allowing an adhering member and a spoiler to freely move against each other.

The objects of the present invention are not limited thereto, and the other objects of the present invention will be described in or be apparent from the following description of the embodiments.

### [Technical Solution]

In accordance with the present invention, the above and other objects can be accomplished by providing a wiper blade assembly, comprising: an adhering member; an elastic member configured to support the adhering member; a rubber rail configured to be coupled to the adhering member; and spoilers configured to cover the elastic member and include rubber rail fixing units which fix the rubber rail, wherein the rubber rail fixing units are formed in one body by double extrusion to be fixed together and the rubber rail fixing units and the rubber rail are formed of a plastic material.

Further, in the wiper blade assembly of the present invention, the rubber rail fixing units and the rubber rail are formed of polycarbonate (PC) or polypropylene (PP).

Further, in the wiper blade assembly of the present invention, the elastic member comprises a first elastic element, a second elastic element disposed in parallel with the first elastic element, and a rubber rail insertion hole disposed between the first elastic element and the second elastic element, and the rubber rail fixing units fix the rubber rail with a predetermined portion of the rubber rail inserted into the rubber rail insertion hole.

Further, in the wiper blade assembly of the present invention, the rubber rail comprises a body, a rubber rail protrusion disposed at an upper part of the rubber rail, and a connecting portion connecting the body and the rubber rail protrusion, each of the rubber rail fixing units comprises a rubber rail protrusion receiving part into which the rubber rail protrusion is inserted, and the rubber rail is coupled to the rubber rail fixing units by inserting the rubber rail protrusion into the rubber rail protrusion receiving part.

Further, in the wiper blade assembly of the present invention, each of the rubber rail fixing units further comprises a rubber rail support unit supporting the rubber rail, the rubber rail support unit including a first rubber rail support, a second rubber rail support disposed in parallel with the first rubber rail support, and an insertion hole disposed between the first rubber rail support and the second rubber rail support, and the rubber rail is coupled to the rubber rail fixing units by inserting the rubber rail protrusion into the rubber rail protrusion receiving part and coupling the connecting portion into the insertion hole.

Further, in the wiper blade assembly of the present invention, the rubber rail protrusion has a contact surface formed at a bottom thereof and contacting one surface of the rubber rail support, the rubber rail support unit has a contact surface formed at a top thereof and contacting one surface of the rubber rail protrusion, and the contact surface of the rubber rail protrusion and the contact surface of the rubber rail support unit contact each other.

Further, in the wiper blade assembly of the present invention, the rubber rail fixing units slidably move along the rubber rail.

### [Advantageous Effects]

According to the present invention, it is possible to reduce the coefficient of friction at the contact surfaces (or the interfaces) between rubber rail fixing units and a rubber rail by forming both the rubber rail fixing units and the rubber rail of a plastic material. As a result, the rubber rail and the rubber rail fixing units can freely move against each other.

In addition, it is possible to improve the movement of an adhering member coupled to the rubber rail and the mobility of the adhering member and the rubber rail fixing units against each other. Moreover, it is possible to improve the mobility of the adhering member and spoilers, which are formed in one body with the rubber rail fixing units.

### [Description of Drawings]

FIG. 1 is a coupled perspective view illustrating a wiper blade assembly according to an embodiment, and FIG. 2 is an exploded perspective view illustrating the wiper blade assembly.
FIG. 3 is a coupled perspective view illustrating the spoilers 500, the elastic member 700 and the rubber rail 800 of the wiper blade assembly 10, and FIG. 4 is an exploded perspective view illustrating the spoilers 500, the elastic member 700 and the rubber rail 800 of the wiper blade assembly 10.
FIG. 5 is an exploded cross-sectional view taken along line I-I of FIG. 3, and FIG. 6 is a coupled cross-sectional view taken along line I-I of FIG. 3.

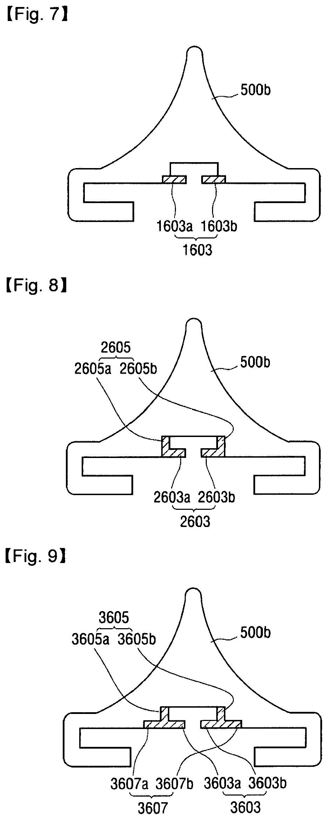

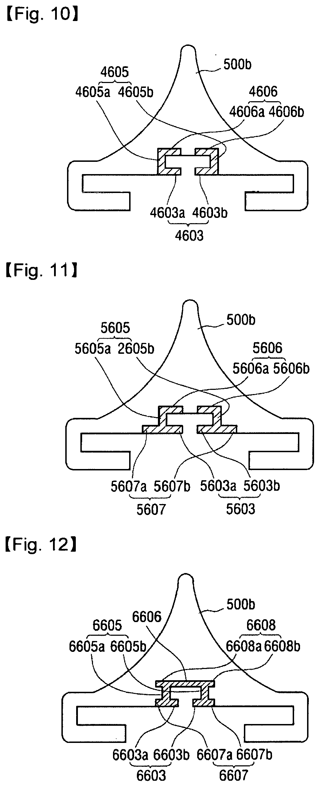

FIG. 7 is a cross-sectional view illustrating a first modified example of the second rubber rail fixing unit 600b, FIG. 8 is a cross-sectional view illustrating a second modified example of the second rubber rail fixing unit 600b, FIG. 9 is a cross-sectional view illustrating a third modified example of the second rubber rail fixing unit 600b, FIG. 10 is a cross-sectional view illustrating a fourth modified example of the second rubber rail fixing unit 600b, FIG. 11 is a cross-sectional view illustrating a fifth modified example of the second rubber rail fixing unit 600b, and FIG. 12 is a cross-sectional view illustrating a sixth modified example of the second rubber rail fixing unit 600b.
FIG. 13 is a coupled cross-sectional view taken along line I-I of FIG. 3.

### [Mode for Invention]

Hereinafter, preferred embodiments of the present invention will now be described in detail with reference to the accompanying drawings, such that those skilled in the art can easily practice the present invention.

Advantages and features of the present invention and methods of accomplishing the same may be understood more readily by reference to the following detailed description of exemplary embodiments and the accompanying drawings. The present invention may, however, be embodied in many different forms and should not be construed as being limited to the exemplary embodiments set forth herein.

Rather, these exemplary embodiments are provided so that this disclosure will be thorough and complete and will fully convey the concept of the invention to those skilled in the art, and the present invention will only be defined by the appended claims. Like reference numerals refer to like elements throughout the specification.

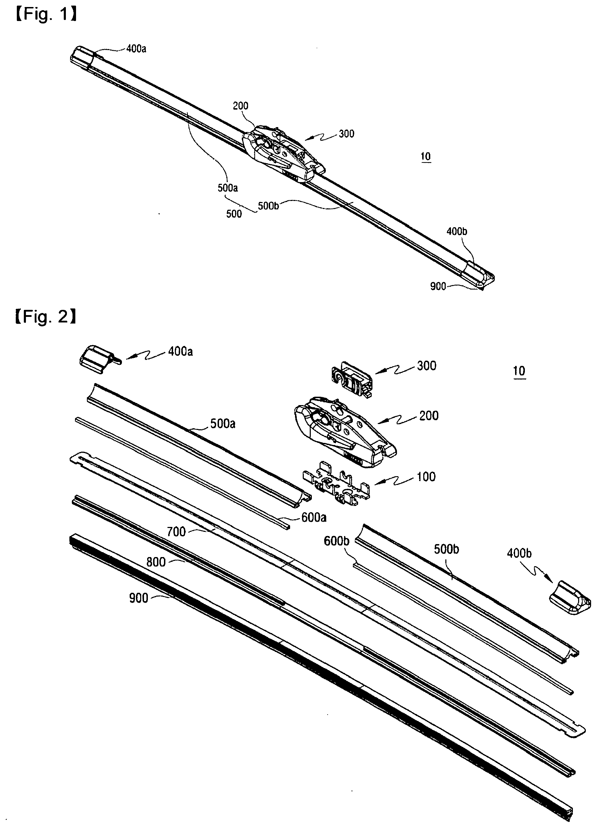

FIG. 1 is a coupled perspective view illustrating a wiper blade assembly according to an embodiment, and FIG. 2 is an exploded perspective view illustrating the wiper blade assembly.

Referring to FIGS. 1 and 2, a wiper blade assembly 10 includes an adhering member 900 which is formed of a rubber material and is placed in contact with the wind shield of a vehicle, an elastic member 700 which supports the adhering member 900, and a pair of spoilers 500 which cover the elastic member 700.

The wiper blade assembly 10 also includes a clamp 100 connected to the elastic member 700 and an adaptor coupled to the clamp 100. The adaptor 200 is connected to a connector 300. The wiper blade assembly 10 is coupled to a wiper arm (not illustrated) of the vehicle via the connector 300.

As illustrated in FIGS. 1 and 2, the wiper blade assembly 10 also includes a rubber rail 800 coupled to the adhering member 900. Once coupled to the elastic member 700, the rubber rail 800 can be prevented by first and second rubber rail fixing units 600a and 600b from being detached from the elastic member 700.

That is, the rubber rail 800 is inserted into the elastic member 700, and is also inserted into the first and second rubber rail fixing units 600a and 600b. As a result, the rubber rail 800 can be prevented from being detached from the elastic member 700.

The wiper arm is coupled to the connector 300 so that the wiper blade assembly 10 can perform a wiping operation by using power applied thereto from the wiper arm.

The spoilers 500 may be respectively formed in one body with the first and second rubber rail fixing units 600a and 600b by double extrusion.

That is, for convenience, the spoilers 500 and the first and second rubber rail fixing units 600a and 600b are illustrated in FIG. 2 as being separate from each other, but may actually be formed by double extrusion to be fixed to each other.

For example, the first and second rubber rail fixing units 600a and 600b and the rubber rail 800 may be formed of a plastic material. In this example, the mobility of the first and second rubber rail fixing units 600a and 600b against the surface of the rubber rail 800 can be improved, and thus, during the operation of a wiper blade, the first and second rubber rail fixing units 600a and 600b and the rubber rail 800 can smoothly move against each other.

That is, by forming the first and second rubber rail fixing units 600a and 600b and the rubber rail 800 of a plastic material, the coefficient of friction at the contact surfaces (or the interfaces) between the rubber rail 800 and the first and second rubber rail fixing units 600a and 600b can be reduced, thereby facilitating the movement of the rubber rail 800 and the first and second rubber rail fixing units 600a and 600b against each other.

An improved or facilitated mobility of the rubber rail 800 and the first and second rubber rail fixing units 600a and 600b against each other may mean that the first and second rubber rail fixing units 600a and 600b ma slidably move against the rubber rail 800.

An improved mobility of the rubber rail 800 and the first and second rubber rail fixing units 600a and 600b against each other may result in an improved mobility of the adhering member 900, which is coupled to the rubber rail 800, and the first and second rubber rail fixing units 600a and 600b against each other, and may also result in an improved mobility of the spoilers 500, which are respectively formed in one body with the first and second rubber rail fixing units 600a and 600b, and the adhering member 900 against each other.

In the case of a related-art wiper blade, since the movement of a cover member is not free from the movement of an adhering member, the movement of the cover member may be limited even with variations in the curvature of the adhering member, and as a result, the cover member may be damaged. In addition, the limited movement of the cover member may interfere with the change of the curvature of the adhering member and may thus adversely affect the wiping performance of the adhering member.

The aforementioned problems associated with a related-art wiper blade may be addressed by improving the mobility of the spoilers 500 and the adhering member against each other.

In FIGS. 1 and 2, reference numerals 400a and 400b indicate end covers which are coupled to the spoilers 500. The present invention is not limited to the presence of the end covers 400a and 400b.

FIG. 3 is a coupled perspective view illustrating the spoilers 500, the elastic member 700 and the rubber rail 800 of the wiper blade assembly 10, and FIG. 4 is an exploded perspective view illustrating the spoilers 500, the elastic member 700 and the rubber rail 800 of the wiper blade assembly 10.

For convenience, the adhering member 600 illustrated in FIGS. 1 and 2 is omitted from FIGS. 3 and 4. Even though not specifically illustrated, the adhering member 600 may be inserted into, and thus coupled to, the rubber rail 800.

More specifically, as illustrated in FIG. 5, the rubber rail 800 includes an adhering member insertion part 801. The adhering member 600 may be coupled to the rubber rail 800 by being inserted into the adhering member insertion part 801.

Referring to FIGS. 3 and 4, the spoilers 500 include first and second spoilers 500a and 500b. The first and second spoilers 500a and 500b may be formed by double extrusion to be fixed to the first and second rubber rail fixing units 600a and 600b, respectively.

Once coupled to the elastic member 700, the rubber rail 800 may be prevented by the first and second rubber rail fixing units 600a and 600b from being detached from the elastic member 700. It will be described later in detail how the first and second rubber rail fixing units 600a and 600b, the elastic member 700 and the rubber rail 800 are coupled to one another with reference to FIGS. 5 and 6.

The first and second spoilers 500a and 500b are formed in one body with, and thus fixed to, the first and second rubber rail fixing units 600a and 600b, respectively, and the rubber rail 800 is coupled to the elastic member 700 and is also coupled to the first and second rubber rail fixing units 600a and 600b. Accordingly, the rubber rail 800 can be prevented from being detached from the elastic member 700.

It will hereinafter be described how the spoilers 500, the elastic member 700 and the rubber rail 800 are coupled to one another.

FIG. 5 is an exploded cross-sectional view taken along line I-I of FIG. 3, and FIG. 6 is a coupled cross-sectional view taken along line I-I of FIG. 3.

Referring to FIG. 5 and 6, the second spoiler 500b and the second rubber rail fixing unit 600b are formed in one body with, and fixed to, each other. The second spoiler 500b and the second rubber rail fixing unit 600b may be formed in one body with each other by double extrusion.

The elastic member 700 includes a first elastic part 701a, a second elastic part 701b disposed in parallel with the first elastic part 701a, and a rubber rail insertion hole 702 disposed between the first elastic part 701a and the second elastic part 701b.

The rubber rail 800 includes a body 807 and the adhering member insertion part 801 disposed below the body 807. By inserting the adhering member 600 into the adhering member insertion part 801, the adhering member 600 may be coupled to the rubber rail 800.

The rubber rail 800 also includes a rubber rail protrusion 803 which is inserted into, and thus supported by, the second rubber rail fixing unit 600b, and a connecting portion 804 which connects the body 807 and the rubber rail protrusion 803.

The rubber rail protrusion 803 may include a contact surface 805 which is provided at the bottom of the rubber rail protrusion 803 and contacts one surface of the second rubber rail fixing unit 600b.

Referring further to FIGS. 5 and 6, the second rubber rail fixing unit 600b, which is coupled to the rubber rail 800, includes a rubber rail protrusion receiving part 601. By inserting the rubber rail protrusion 803 of the rubber rail 800 into the rubber rail protrusion receiving part 601 of the second rubber rail fixing unit 600b, the rubber rail 800 may be coupled to the second rubber rail fixing unit 600b.

The second rubber rail fixing unit 600b may also include a rubber rail support unit 603. The rubber rail support unit 603 includes a first rubber rail support 603a, a second rubber rail support 603b disposed in parallel with the first rubber rail support 603a, and an insertion hole 602 disposed between the first rubber rail support 603a and the second rubber rail support 603b.

That is, the rubber rail protrusion 803 of the rubber rail 800 may be inserted into the rubber rail protrusion receiving part 601 of the second rubber rail fixing unit 600b, and the connecting portion 804 of the rubber rail 800 is coupled into the insertion hole 602 of the second rubber rail fixing unit 600b, thereby coupling the rubber rail 800 to the second rubber rail fixing unit 600b.

The rubber rail support unit 603 may include a contact surface 604 which is provided at the top of the rubber rail support unit 603 and contacts the rubber rail protrusion 803 of the rubber rail 800.

That is, the contact surface 604 of the rubber rail support unit 603 and the contact surface 805 of the rubber rail protrusion 803 of the rubber rail 800 may contact each other. Since the second rubber rail fixing unit 600b and the rubber rail 800 may both be formed of a plastic material, the coefficient of friction at the contact or interface between the second rubber rail fixing unit 600b and the rubber rail 800 may be reduced, and thus, the rubber rail 800 and the second rubber rail fixing unit 600b may easily move against each other.

That the rubber rail 800 and the second rubber rail fixing unit 600b may freely move against each other may mean that the second rubber rail fixing unit 600b may slidably move along the rubber rail 800, and particularly, that the contact surface 604 of the rubber rail support unit 603 may slidably move against the contact surface 805 of the rubber rail protrusion 803.

The second rubber rail fixing unit 600b and the rubber rail 800 may be formed of, but is not limited to, a plastic material, such as polycarbonate (PC) or polypropylene (PP). For example, the second rubber rail fixing unit 600b may be formed of PP, and the rubber rail 800 may be formed of PC.

The second spoiler 500b may be formed in one body with, and thus coupled to, the second rubber rail fixing unit 600b. Accordingly, to couple the second rubber rail fixing unit 600b to the rubber rail 800, the rubber rail support unit 603 and the recess 601 may be provided in the second rubber rail fixing unit 600b.

Since the second rubber rail fixing unit 600b and the rubber rail 800 are formed of a plastic material, the coefficient of friction at the contact surface (or the interface) between the second rubber rail fixing unit 600b and the rubber rail 800 may be reduced, and thus, the rubber rail 800 and the second rubber rail fixing unit 600b may freely move against each other.

The structure of the second rubber rail fixing unit 600b will hereinafter be described.

Referring further to FIGS. 5 and 6, the second rubber rail fixing unit 600b includes the first rubber rail support 603a and the second rubber rail support 603b.

The second rubber rail fixing unit 600b may also include a first vertical extension 605a which vertically extends from the first rubber rail support 603a and a second vertical extension 605b which vertically extends from the second rubber rail support 603b. For convenience, the first vertical extension 605a and the second vertical extension 605b may be collectively referred to as vertical extensions 605.

The second rubber rail fixing unit 600b may also include a vertical extension connecting portion 606 which connects the first vertical extension 605a and the second vertical extension 605b. The vertical extensions 605 and the vertical extension connecting portion 606 may be provided for strengthening the coupling between the second spoiler 500b and the second rubber rail fixing unit 600b. The shape of the second rubber rail fixing unit 600b may vary depending on the presence or absence of the vertical extensions 605 and the vertical extension connecting portion 606.

Modified examples of the second rubber rail fixing unit 600b will hereinafter be described.

FIG. 7 is a cross-sectional view illustrating a first modified example of the second rubber rail fixing unit 600b, FIG. 8 is a cross-sectional view illustrating a second modified example of the second rubber rail fixing unit 600b, FIG. 9 is a cross-sectional view illustrating a third modified example of the second rubber rail fixing unit 600b, FIG. 10 is a cross-sectional view illustrating a fourth modified example of the second rubber rail fixing unit 600b, FIG. 11 is a cross-sectional view illustrating a fifth modified example of the second rubber rail fixing unit 600b, and FIG. 12 is a cross-sectional view illustrating a sixth modified example of the second rubber rail fixing unit 600b.

Referring to FIG. 7, the second rubber rail fixing unit 600b may include a first rubber rail support 1603a and a second rubber rail support 1603b only. The rubber rail fixing unit illustrated in FIG. 7 may be of a basic type.

Referring to FIG. 8, the second rubber rail fixing unit 600b may include a first rubber rail support 2603a and a second rubber rail support 2603b. The second rubber rail fixing unit 600b may also include vertical extensions 2605, i.e., a first vertical extension 2605a vertically extended from the first rubber rail support 2603a and a second vertical extension 2605b vertically extended from the second rubber rail support 2603b.

Referring to FIG. 9, the second rubber rail fixing unit 600b may include a first rubber rail support 3603a and a second rubber rail support 3603b. The second rubber rail fixing unit 600b may also include vertical extensions 3605, i.e., a first vertical extension 3605a vertically extended from the first rubber rail support 3603a and a second vertical extension 3605b vertically extended from the second rubber rail support 3603b.

The second rubber rail fixing unit 600b may also include horizontal extensions 3607, i.e., a first horizontal extension 3607a horizontally extended from the first rubber rail support 3603a and a second horizontal extension 3607b horizontally extended from the second rubber rail support 3603b.

Referring to FIG. 10, the second rubber rail fixing unit 600b may include a first rubber rail support 4603a and a second rubber rail support 4603b. The second rubber rail fixing unit 600b may also include vertical extensions 4605, i.e., a first vertical extension 4605a vertically extended from the first rubber rail support 4603a and a second vertical extension 4605b vertically extended from the second rubber rail support 4603b.

The second rubber rail fixing unit 600b may also include one or more vertical extension connecting portions 4606 connected to the first vertical extension 4605a and the second vertical extension 4605b. For example, the second rubber rail fixing unit 600b may include a single vertical extension connecting portion 4606, as illustrated in FIG. 5. In another example, the second rubber rail fixing unit 600b may include two vertical extension connecting portions 4606, i.e., a first vertical extension connecting portion 4606a connected to the first vertical extension 4605a and a second vertical extension connecting portion 4606b connected to the second vertical extension 4605b, as illustrated in FIG. 10.

Referring to FIG. 11, the second rubber rail fixing unit 600b may include a first rubber rail support 5603a and a second rubber rail support 5603b. The second rubber rail fixing unit 600b may also include vertical extensions 5606, i.e., a first vertical extension 5605a vertically extended from the first rubber rail support 5603a and a second vertical extension 5605b vertically extended from the second rubber rail support 5603b.

The second rubber rail fixing unit 600b may also include vertical extension connecting portions 5606, i.e., a first vertical extension connecting portion 5606a connected to the first vertical extension 5605a and a second vertical extension connecting portion 5606b connected to the second vertical extension 5605b.

The second rubber rail fixing unit 600b may also include horizontal extensions 5607, i.e., a first horizontal extension 5607a horizontally extended from the first rubber rail support 5603a and a second horizontal extension 5607b horizontally extended from the second rubber rail support 5603b.

Referring to FIG. 12, the second rubber rail fixing unit 600a may include a first rubber rail support 5603a and a second rubber rail support 5603b. The second rubber rail fixing unit 600b may also include vertical extensions 5605, i.e., a first vertical extension 5605a vertically extended from the first rubber rail support 5603a and a second vertical extension 5605b vertically extended from the second rubber rail support 5603b.

The second rubber rail fixing unit 600b may also include first horizontal extensions 6607, i.e., a first horizontal extension 6607a horizontally extended from the first rubber rail support 6603a and a second horizontal extension 6607b horizontally extended from the second rubber rail support 6603b.

The second rubber rail fixing unit 600b may also include a vertical extension connecting portion 6606 connected to the first vertical extension 6605a and the second vertical extension 6605b. The vertical extension connecting portion 6606 may include second horizontal extensions, i.e., a first horizontal extension 6608a horizontally extended from the vertical extension connecting portion 6606 in one direction and a second horizontal extension 6608b horizontally extended from the vertical extension connecting portion 6606 in the other direction.

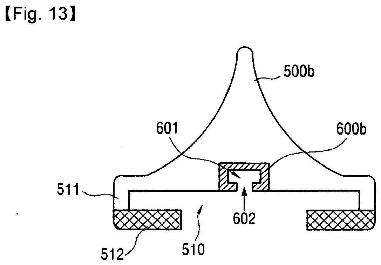

FIG. 13 is a coupled cross-sectional view taken along line I-I of FIG. 3. More specifically, FIG. 13 illustrates a modified example of the second spoiler 500b.

The description of FIGS. 5 and 6 is also applicable to FIG. 13, and thus will not be repeated here.

Referring to FIG. 13, the second spoiler 500b, which is provided for covering the elastic member 700, accommodates therein the second rubber rail fixing unit 600b for fixing the rubber rail 800.

The second spoiler 500b, like its counterpart illustrated in FIGS. 5 and 6, includes an elastic member insertion unit 510 which is provided at the bottom of the second spoiler 500b and into which the elastic member 700 is inserted. The elastic member insertion unit 510 may be configured to provide space for accommodating an elastic member support unit which supports the elastic member 700. The elastic member support unit may include an elastic member vertical support 511 supporting the lateral sides of the elastic member 700 and an elastic member horizontal support 512 supporting the bottom of the elastic member 700.

The second spoiler 500b and the second rubber rail fixing unit 600b may be formed in one body with each other by double extrusion, and may thus be fixed to each other.

In the second spoiler 500b, unlike in its counterpart illustrated in FIGS. 5 and 6, the elastic member vertical support 511 and the elastic member horizontal support 512 may be formed in one body with each other by double extrusion, and may thus be fixed to each other.

The elastic member vertical support 511 may be formed of a typical spoiler material such as Santoprene, and the elastic member horizontal support 512 may be formed of the same material as the second rubber rail fixing unit 600b, for example, PC or PP.

The elastic member 700 may be inserted into the elastic member insertion unit 510, and may thus be prevented from the second spoiler 500b by being supported by the elastic member horizontal support 512. When the elastic member 700 is inserted into, and thus supported by, the second spoiler 500b, more force may be applied to the horizontal support 512 than to the rest of the second spoiler 500b.

Accordingly, the elastic member horizontal support 512 may be formed of a more rigid material than the rest of the second spoiler 500b, and may thus be able to firmly support the elastic member 700. As described above, the shape of a rubber rail fixing unit may vary depending on the presence or absence of first horizontal extensions, vertical extensions, vertical extension connecting portions, and second horizontal extensions, and thus should not be construed as being limited to those set forth herein.

Although the foregoing embodiments have been described to practice the road sign reflector and the manufacturing method thereof according to the present invention, these embodiments are set forth for illustrative purposes and do not serve to limit the invention. The present invention is only limited by the scope of the appended claims.

## Claims

1. A wiper blade assembly, comprising:
an adhering member (900);
an elastic member (700) configured to support the adhering member (900);
a rubber rail (800) configured to be coupled to the adhering member (900); and
spoilers (500) configured to cover the elastic member (700) and include rubber rail fixing units (600a, 600b) which fix the rubber rail (800),
**characterized in that** the rubber rail fixing units (600a, 600b) and the spoilers (500) are formed in one body by double extrusion to be fixed together and the rubber rail fixing units (600a, 600b) and the rubber rail (800) are formed of a plastic material.

2. The wiper blade assembly of claim 1, wherein the rubber rail fixing units (600a, 600b) and the rubber rail (800) are formed of polycarbonate (PC) or polypropylene (PP).

3. The wiper blade assembly of claim 1 or 2, wherein the elastic member (700) comprises a first elastic element (701a), a second elastic element (701b) disposed in parallel with the first elastic element (701a), and a rubber rail insertion hole (702) disposed between the first elastic element (701a) and the second elastic element (701b), and the rubber rail fixing units (600a, 600b) fix the rubber rail (800) with a predetermined portion of the rubber rail (800) inserted into the rubber rail insertion hole (702).

4. The wiper blade assembly of anyone of claims 1 to 3, wherein the rubber rail (800) comprises a body (807), a rubber rail protrusion (803) disposed at an upper part of the rubber rail (800), and a connecting portion (804) connecting the body (807) and the rubber rail protrusion (803), each of the rubber rail fixing units (600a, 600b) comprises a rubber rail protrusion receiving part (601) into which the rubber rail protrusion (803) is inserted, and the rubber rail (800) is coupled to the rubber rail fixing units (600a, 600b) by inserting the rubber rail protrusion (803) into the rubber rail protrusion receiving part (601).

5. The wiper blade assembly of claim 4, wherein each of the rubber rail fixing units (600a, 600b) further comprises a rubber rail support unit (603) supporting the rubber rail (800), the rubber rail support unit (603) including a first rubber rail support (603a), a second rubber rail support (603b) disposed in parallel with the first rubber rail support (603a), and an insertion hole (602) disposed between the first rubber rail support (603a) and the second rubber rail support (603b), and the rubber rail (800) is coupled to the rubber rail fixing units (600a, 600b) by inserting the rubber rail protrusion (803) into the rubber rail protrusion receiving part (601) and coupling the connecting portion (804) into the insertion hole (602).

6. The wiper blade assembly of claim 5, wherein the rubber rail protrusion (803) has a contact surface (805) formed at a bottom thereof and contacting one surface of the rubber rail support (603a, 603b), the rubber rail support unit (603) has a contact surface (604) formed at a top thereof and contacting one surface of the rubber rail protrusion (803), and the contact surface (805) of the rubber rail protrusion (803) and the contact surface (604) of the rubber rail support unit (603) contact each other.

7. The wiper blade assembly of anyone of the foregoing claims, wherein the rubber rail fixing units (600a, 600b) slidably move along the rubber rail (800) .

## Patentansprüche

1. Wischerblattanordnung, umfassend:
ein anhaftendes Element (900);
ein elastisches Element (700), das zum Stützen des anhaftenden Elements (900) ausgebildet ist;
eine Kautschukleiste (800), die zum Koppeln mit dem anhaftenden Element (900) ausgebildet ist; und
Luftabweiser (500), die zum Bedecken des elastischen Elements (700) ausgebildet sind und Kautschukleiste-Fixiereinheiten (600a, 600b) umfassen, welche die Kautschukleiste (800) fixieren,
**dadurch gekennzeichnet, dass** die Kautschukleiste-Fixiereinheiten (600a, 600b) und die Luftabweiser (500) als ein Körper durch eine Doppelextrusion ausgebildet worden sind, so dass sie aneinander fixiert sind, und die Kautschukleiste-Fixiereinheiten (600a, 600b) und die Kautschukleiste (800) aus einem Kunststoffmaterial ausgebildet sind.

2. Wischerblattanordnung nach Anspruch 1, bei der die Kautschukleiste-Fixiereinheiten (600a, 600b) und die Kautschukleiste (800) aus Polycarbonat (PC) oder Polypropylen (PP) ausgebildet sind.

3. Wischerblattanordnung nach Anspruch 1 oder 2, bei der das elastische Element (700) ein erstes elastisches Element (701a), ein zweites elastisches Element (701b), das parallel zu dem ersten elastischen Element (701a) angeordnet ist, und ein Kautschukleiste-Einsetzloch (702), das zwischen dem ersten elastischen Element (701a) und dem zweiten elastischen Element (701b) angeordnet ist, umfasst und die Kautschukleiste-Fixiereinheiten (600a, 600b) die Kautschukleiste (800) so fixieren, dass ein vorgegebener Abschnitt der Kautschukleiste (800) in das Kautschukleiste-Einsetzloch (702) eingesetzt ist.

4. Wischerblattanordnung nach einem der Ansprüche 1 bis 3, bei der die Kautschukleiste (800) einen Körper (807), eine Kautschukleiste-Vorwölbung (803), die an einem oberen Teil der Kautschukleiste (800) angeordnet ist, und einen Verbindungsabschnitt (804), der den Körper (807) und die Kautschukleiste-Vorwölbung (803) verbindet, umfasst, wobei jede der Kautschukleiste-Fixiereinheiten (600a, 600b) einen Kautschukleiste-Vorwölbungsaufnahmeteil (601) umfasst, in den die Kautschukleiste-Vorwölbung (803) eingesetzt wird, und die Kautschukleiste (800) mit den Kautschukleiste-Fixiereinheiten (600a, 600b) durch Einsetzen der Kautschukleiste-Vorwölbung (803) in den Kautschukleiste-Vorwölbungsaufnahmeteil (601) gekoppelt wird.

5. Wischerblattanordnung nach Anspruch 4, bei der jede der Kautschukleiste-Fixiereinheiten (600a, 600b) ferner eine Kautschukleiste-Trägereinheit (603) umfasst, welche die Kautschukleiste (800) stützt, wobei die Kautschukleiste-Trägereinheit (603) einen ersten Kautschukleiste-Träger (603a), einen zweiten Kautschukleiste-Träger (603b), der parallel zu dem ersten Kautschukleiste-Träger (603a) angeordnet ist, und ein Einsetzloch (602) umfasst, das zwischen dem ersten Kautschukleiste-Träger (603a) und dem zweiten Kautschukleiste-Träger (603b) angeordnet ist, und die Kautschukleiste (800) mit den Kautschukleiste-Fixiereinheiten (600a, 600b) durch Einsetzen der Kautschukleiste-Vorwölbung (803) in den Kautschukleiste-Vorwölbungsaufnahmeteil (601) und Koppeln des Verbindungsabschnitts (804) mit dem Einsetzloch (602) gekoppelt wird.

6. Wischerblattanordnung nach Anspruch 5, bei der die Kautschukleiste-Vorwölbung (803) eine Kontaktoberfläche (805) aufweist, die an einer Unterseite davon ausgebildet ist und eine Oberfläche des Kautschukleiste-Trägers (603a, 603b) kontaktiert, wobei die Kautschukleiste-Trägereinheit (603) eine Kontaktoberfläche (604) aufweist, die an einer Oberseite davon ausgebildet ist und eine Oberfläche der Kautschukleiste-Vorwölbung (803) kontaktiert, und die Kontaktoberfläche (805) der Kautschukleiste-Vorwölbung (803) und die Kontaktoberfläche (604) der Kautschukleiste-Trägereinheit (603) einander kontaktieren.

7. Wischerblattanordnung nach einem der vorhergehenden Ansprüche, bei der sich die Kautschukleiste-Fixiereinheiten (600a, 600b) verschiebbar entlang der Kautschukleiste (800) bewegen.

## Revendications

1. Ensemble formant raclette d'essuie-glace, comprenant :
un élément adhésif (900) ;
un élément élastique (700) configuré pour supporter l'élément adhésif (900) ;
un rail en caoutchouc (800) configuré pour être couplé à l'élément adhésif (900) ; et
des déflecteurs (500) configurés pour couvrir l'élément élastique (700) et incluant des unités de fixation pour rail en caoutchouc (600a, 600b) qui fixent le rail en caoutchouc (800),
**caractérisé en ce que** les unités de fixation pour rail en caoutchouc (600a, 600b) et les déflecteurs (500) sont formé(e)s d'une seule pièce par double extrusion afin d'être fixé(e)s ensemble et les unités de fixation pour rail en caoutchouc (600a, 600b) et le rail en caoutchouc (800) sont formé(e)s d'une matière plastique.

2. Ensemble formant raclette d'essuie-glace selon la revendication 1, dans lequel les unités de fixation pour rail en caoutchouc (600a, 600b) et le rail en caoutchouc (800) sont formé(e)s en polycarbonate (PC) ou en polypropylène (PP).

3. Ensemble formant raclette d'essuie-glace selon la revendication 1 ou 2, dans lequel l'élément élastique (700) comprend un premier élément élastique (701a), un second élément élastique (701b) disposé en parallèle au premier élément élastique (701a), et un trou d'insertion pour rail en caoutchouc (702) disposé entre le premier élément élastique (701a) et le second élément élastique (701b), et les unités de fixation pour rail en caoutchouc (600a, 600b) fixent le rail en caoutchouc (800) avec une portion prédéterminée du rail en caoutchouc (800) insérée dans le trou d'insertion pour rail en caoutchouc (702).

4. Ensemble formant raclette d'essuie-glace selon l'une quelconque des revendications 1 à 3, dans lequel le rail en caoutchouc (800) comprend un corps (807), une projection de rail en caoutchouc (803) disposée à une partie supérieure du rayon caoutchouc (800), et une portion de connexion (804) qui connecte le corps (807) et la projection de rail en caoutchouc (803), chacune des unités de fixation pour rail en caoutchouc (600a, 600b) comprend une partie de réception de projection de rail en caoutchouc (601) dans laquelle est insérée la projection de rail en caoutchouc (803), et le rail en caoutchouc (800) est couplé aux unités de fixation pour rail en caoutchouc (600a, 600b) en insérant la projection de rail en caoutchouc (803) dans la partie de réception pour projection de rail en caoutchouc (601).

5. Ensemble formant raclette d'essuie-glace selon la revendication 4, dans lequel chacune des unités de fixation pour rail en caoutchouc (600a, 600b) comprend en outre une unité de support pour rail en caoutchouc (603) qui supporte le rail en caoutchouc (800), l'unité de support pour rail en caoutchouc (603) incluant un premier support pour rail en caoutchouc (603a), un second support pour rail en caoutchouc (603b) disposé en parallèle au premier support pour rail en caoutchouc (603a), et un trou d'insertion (602) disposé entre le premier support pour rail en caoutchouc (603a) et le second support pour rail en caoutchouc (603b), et le rail en caoutchouc (800) est couplé aux unités de fixation pour rail en caoutchouc (600a, 600b) en insérant la projection pour rail en caoutchouc (803) dans la partie de réception pour projection de rail en caoutchouc (601) et en couplant la portion de connexion (804) dans le trou d'insertion (602).

6. Ensemble formant raclette d'essuie-glace selon la revendication 5, dans lequel la projection de rail en caoutchouc (803) possède une surface de contact (805) formée à sa partie inférieure et en contact avec une surface du support pour rail en caoutchouc (603a, 603b), l'unité de support pour rail en caoutchouc (603) possède une surface de contact (604) formée à sa partie supérieure et en contact avec une surface de la projection de rail en caoutchouc (803), et la surface de contact (805) de la projection de rail en caoutchouc (803) et la surface de contact (604) de l'unité de support pour rail en caoutchouc (603) sont en contact l'une avec l'autre.

7. Ensemble formant raclette d'essuie-glace selon l'une quelconque des revendications précédentes, dans lequel les unités de fixation pour rail en caoutchouc (600a, 600b) se déplacent en coulissement le long du rail en caoutchouc (800).
